# EUROPÄISCHE PATENTSCHRIFT

(11) **EP 0 524 508 B1**
(45) Veröffentlichungstag und Bekanntmachung des Hinweises auf die Patenterteilung: **07.09.1994**
(21) Anmeldenummer: 92111823.8
(22) Anmeldetag: 10.07.1992
(51) Int. Cl.: C08G 69/18, C08G 69/20, C08L 77/02

(54) **Verdickte, Füll-/Verstärkungsstoffe enthaltende Lactamschmelzen und ihre Verwendung**
Thickened lactam-containing melts with reinforcement materials and/or fillers and their use
Masses fondues de lactame épaissies contenant des agents renforçant et/ou des charges et leur utilisation

(30) Priorität: 23.07.1991 DE 4124316
(43) Veröffentlichungstag der Anmeldung: 27.01.1993
(73) Patentinhaber: BAYER AG, 51368 Leverkusen (DE)
(72) Erfinder: Heinz, Hans-Detlef, Dr., W-4150 Krefeld 11 (DE); Fahnler, Friedrich, Dipl.-Ing., W-4150 Krefeld 11 (DE); Wassen, Jürgen, Dr., W-5090 Leverkusen 1 (DE)

(56) Entgegenhaltungen:
- EP-A- 0 131 113
- DE-A- 3 101 771
- DATABASE WPI, Accession Nr. 77-44379Y (25), Derwent Publications Ltd, London,GB; & JP-A-52 057 294
- PATENT ABSTRACTS OF JAPAN, Band 9, Nr. 145 (C-287), 20. Juni 1985;& JP-A-60 028 431

## Beschreibung

Die Erfindung betrifft Füll/Verstärkungsstoff-haltige, verdickte ω-Lactammischungen, sowie ihre Verwendung, bevorzugt im Bereich der aktivierten anionischen Lactampolymerisation, zur Herstellung von (Guß)polyamiden. Die Lactammischungen enthalten erfindungsgemäß bestimmte, statistisch aufgebaute Dien-Nitrilmonomer-Copolymere sowie Füll-/Verstärkungsstoffe, wobei die Copolymeren sich in den Lactamen lösen und eine erhöhte Viskosität derselben bewirken. Bevorzugtes ω-Lactam ist ε-Caprolactam.

Gußpolyamidteile, z.B. aus ε-Caprolactam hergestellt, weisen bekanntlich ein hohes Niveau der mechanischen Eigenschaften auf; aufgrund ihrer gegenüber Standardspritzgußteilen erhöhten Kristallinität sowie der wesentlich höheren Molekulargewichte sind fast alle mechanischen Eigenschaftswerte gegenüber durch Polykondensation hergestellten Polyamiden verbessert. Aus diesem Grund ist Gußpolyamid ein attraktiver Werkstoff.

Ein Nachteil gegenüber den durch Polykondensation hergestellten Polyamiden liegt aber darin, daß anionisch polymerisiertes Polyamid sich im allgemeinen nicht thermoplastisch verarbeiten läßt. Alle Zusatzstoffe, die im Formteil anwesend sein sollen, müssen daher im allgemeinen in die Lactamschmelze vor der Polymerisation eingebracht werden.

Die Herstellung von Gußpolyamidteilen, ausgehend von niedrigviskosen Lactamschmelzen und Katalysatoren sowie Aktivatoren (aktivierte anionische Polymerisation) ist bekannt (z.B. Vieweg, Müller; Kunststoff-Handbuch Bd. VI, Carl Hanser Verlag, München 1966). Gegenüber Polyurethan-RIM-Systemen ist die Verfahrenstechnik einfacher, da z.B. aufgrund der sehr niedrigviskosen Lactamschmelzen drucklos und unter Einsatz einfacher Pumpen gefördert werden kann.

Für viele Einsatzgebiete wäre es nun wünschenswert, die guten mechanischen Eigenschaften von Gußpolyamidteilen weiter zu steigern, z.B. Härte, Steifigkeit und Festigkeit, vor allem auch den Kriechmodul, indem Verstärkungs- bzw. Füllstoffe zugesetzt werden, wie es von Spritzgußmaterialien her bekannt ist. Genau hier wirkt sich aber die geringe Viskosität der Lactamschmelzen sehr nachteilhaft aus, da aufgrund des Dichteunterschiedes z.B. Glasfasern sehr schnell sedimentieren. Dies macht die Herstellung eines glasfaserverstärkten Gußpolyamids auf konventionellem Wege sehr schwierig.

Überraschend wurde nun gefunden, daß Füll-/Verstärkungsstoffe sich in Lactamschmelzen dann homogen verteilen und stabil dispergieren lassen, wenn diese Schmelzen spezielle, statistisch aufgebaute Dien-/Nitrilmonomer-Copolymere gelöst enthalten.

Erfindungsgemäß soll gegenüber nicht modifizierten Lactamschmelzen die Zeit, bis dispergierte Glasfasern merklich zu sedimentieren beginnen, deutlich erhöht sein, bevorzugt mindestens verdoppelt, besonders bevorzugt mindestens verfünffacht und ganz besonders bevorzugt mindestens verzehnfacht.

In der Deutschen PS-273 492 werden kornförmige Polymere aus Lactamen mit Hilfe von Dispergiermitteln in einer organischen Flüssigkeit (z.B. in aliphatischen Kohlenwasserstoffen) hergestellt.

In der DE 3 101 771 werden zur Vermeidung von Sprödbruch von Polyamiden, die durch anionische Polymerisation hergestellt sind, der Reaktionsmischung vorzugsweise pulvrige oder flüssige Modifikationsmittel (5-50 % Thermoplaste oder Elastomere) beigemischt.

Es ist bekannt (EP 0 131 113), ungesättigte Nitrilkautschuke in Caprolactam zu lösen und die Schmelze anionisch, unter Verwendung von Acyllactamen (N-Acetyl-Caprolactam) als Aktivatoren, zu polymerisieren. Die erhaltenen Polyamide sollen vorzugsweise thermoplastisch verarbeitbar sein. Ein Zusatz von Füll-/Verstärkungsstoffen zu diesen Schmelzen ist nicht offenbart. Weiterhin wird keine Aussage über die Viskosität der Schmelze gemacht. Die Anmeldung enthält keinerlei Hinweis darauf, daß bei Verwendung Nitrilkautschuk gelöst enthaltender Lactamschmelzen eine Sedimentation von Glasfasern verzögert/verhindert werden kann. Die vorliegende Erfindung ist daher überraschend und nicht aus dem Stand der Technik ableitbar.

Gegenstand der Erfindung sind daher flüssige bzw. schmelzbare, Füll-/Verstärkungsstoffe enthaltende, Lactammischungen mit verbesserter Dispergierbarkeit und verminderter Sedimentationstendenz der Füll-/Verstärkungsstoffe, dadurch gekennzeichnet, daß zur Erhöhung der Viskosität der Schmelze der Mischung 1 bis 15 Gew.-% statistischer Dien-/Nitrilmonomer-Copolymerisate (Kautschuke vom Dien-/Nitrilmonomer-Copolymerisat-Typ), insbesondere Butadien/Acrylnitril-Copolymerisate (NBR-Kautschuke) als "Verdicker" gelöst enthalten sind, wobei die Viskosität der Lactamschmelze (ohne Füll-/Verstärkungsstoffe) bei 135°C zwischen 10 und 5.000 mPas (gemessen mit einem Rotationsviskosimeter) beträgt, wie in Ansprüchen 1-7 beschrieben.

Gegenstand der Erfindung ist auch die Verwendung der erfindungsgemäßen Mischungen zur Herstellung verstärkter und/oder gefüllter, vorzugsweise nicht mehr in m-Kresol löslicher, Gußpolyamide, durch hydrolytische Polymerisation oder bevorzugt nach dem Verfahren der aktivierten, anionischen Polymerisation. Gegenstand der Erfindung sind auch ein Verfahren zur Herstellung von Gußpolyamid-Artikeln unter Verwendung der erfindungsgemäßen flüssigen bzw. schmelzbaren Mischungen sowie die entsprechenden Gußpolyamid-Artikel, welche die NBR-Kautschuke als Zusätze enthalten, wie in Ansprüchen 8-10 beschrieben.

Die erfindungsgemäß einzusetzenden Copolymerisate (Verdicker) sind als Substanzen prinzipiell bekannt oder können nach prinzipiell bekannten Verfahren hergestellt werden. Die Copolymerisate besitzen elastische Eigenschaften, weshalb sie auch als "Kautschuke vom Dien-/Nitrilmonomer-Copolymerisat-Typ" (vom NBR-Typ) bezeichnet werden.

Die "Lactamverdicker" sind im wesentlichen statistische Copolymere auf Basis von Dienen und Nitrilmonomeren sowie gegebenenfalls weiteren Monomeren. Geeignete Diene sind 1,3-Butadien, 1,3-Isopren, 2,3-Dimethylbutadien und 1,3-Pentadien, um nur einige Beispiele zu nennen. Bevorzugte Diene sind Butadien und Isopren, insbesondere Butadien.
Als Nitrilmonomer ist insbesondere Acrynitril geeignet.
Es können geringe Mengen (bis zu 10 Gew.-%, bevorzugt bis zu 8 Gew.-%) weiterer Vinylmonomerer, soweit sie sich mit den Dienen und Nitrilmonomeren copolymerisieren lassen, beispielsweise Vinylaromaten (wie Styrol, α-Methylstyrol, m- bzw. p-Methylstyrol etc) und ungesättigte Carbonsäuren (Acrylsäure, Methacrylsäure, Maleinsäure) bzw. deren Derivate (Ester, Halbester, Amide, etc) in den Copolymeren enthalten sein.

Die erfindungsgemäß einzusetzenden Verdicker sind also im wesentlichen statistische Dien-/Nitrilmonomer-, insbesondere Acrylnitril-Butadien-Copolymere mit kautschukartigen Eigenschaften. Sie bestehen zu 90 bis 45 Gew.-%, bevorzugt 85 bis 50 Gew.-% und besonders bevorzugt 82 bis 52 Gew.-%, aus mindestens einem Dien, zu 10 bis 55 Gew.-%, bevorzugt 15 bis 50 Gew.-% und besonders bevorzugt 18 bis 48 Gew.-%, aus mindestens einem Nitrilmonomeren und gegebenenfalls zusätzlich zu 0 bis 10 Gew.-%, bevorzugt 0 bis 8 Gew.-%, aus weiteren, geeigneten Monomeren.

Die Mooney-Viskosität ML 1-4 (100°C) der erfindungsgemäßen einzusetzenden statistischen Dien-/Nitrilcopolymeren soll mindestens 30, bevorzugt mindestens 50 und insbesondere bevorzugt mindestens 60, betragen.

Ganz besonders bevorzugte Verdicker sind statistische Butadien-Acrylnitril-Copolymerisate enthaltend 25 bis 45 Gew.-% Acrylnitril mit einer Mooney-Viskosität ML 1-4 (100°C) von mindestens 75.

Die Verdicker werden bevorzugt den zu polymerisierenden ω-Lactamschmelzen in einer solchen Menge zugesetzt, daß die Viskosität (ohne Füll- und/oder Verstärkungsstoffe) mindestens ca. 50 mPas bei ungefähr 135°C (gemessen i.a. mit einem (Brookfield)-Rotations-Viskosimeter bei einem Schergefälle von ca.20-50 s⁻¹), besonders bevorzugt mindestens 100 mPas, beträgt. Diese Viskosität ist im allgemeinen ausreichend, um, je nach Menge, eine ausreichend stabile Dispersion der Füll- und Verstärkungsstoffe, z.B. Glasfasern, zu erreichen. Andererseits sollte die Viskosität der Lactamschmelze (ohne Füll/Verstärkungsstoffe) bevorzugt nicht höher als etwa 2.000 mPas, besonders bevorzugt nicht höher als 1.000 mPas (bei 135°C) liegen, da ansonsten die Verarbeitbarkeit erschwert sein kann. Je nach Molekulargewicht und Typ der Verdickercopolymerisate werden hierzu bevorzugt 3 bis 10 und besonders bevorzugt 4 bis 7 Gew.-% der Verdickercopolymeren eingesetzt. Die Verdicker werden einzeln oder in einem beliebigen Gemisch eingesetzt.

Die Verdicker sind in den flüssigen bzw. geschmolzenen Mischungen in gelöster Form enthalten. Darunter wird im Rahmen der Erfindung verstanden, daß eine für das Auge im wesentlichen klare Schmelze (z.B. bei 135°C bis 160°C) vorliegt. Evtl. vorhandene, unlösliche Anteile sollten nicht mehr als maximal 5 Gew.-% betragen.

Die erfindungsgemäß einzusetzenden Copolymeren sind grundsätzlich bekannt (siehe Encyclopedia of Polymer Science & Engineering, Vol. 2, Wiley Interscience, John Wiley & Sons, New York 1985).

Als ω-Lactame zur Herstellung des (Guß)Polyamids sind Lactame mit mindestens 4 C-Atomen im Ring (z.B. 4, 6-12 C-Atome) geeignet. Bevorzugte Lactame sind ε-Caprolactam und ω-Laurinlactam. Besonders bevorzugt wird ε-Caprolactam verwendet. Die Lactame können auch in einem beliebigen Gemisch von Lactamen der genannten Art eingesetzt werden.

Es können prinzipiell alle bekannten Katalysatoren für die aktivierte anionische Lactampolymerisation eingesetzt werden, z.B. die Natriumsalze des Caprolactams und des Pyrrolidons, Natriumhydrid, Natriummethanolat, Caprolactam-magnesiumbromid und -iodid.

Es können prinzipiell auch alle bekannten Aktivatoren eingesetzt werden, z.B. Isocyanate, Säurechloride, Säureanhydride, Carbodiimide, Umsetzungsprodukte aus diesen Verbindungen mit Lactamen usw. Bevorzugte Katalysatoren sind die Natriumsalze des Caprolactams und des Pyrrolidons sowie Caprolactam-magnesiumbromid und -iodid. Bevorzugte Aktivatoren sind Isocanate, insbesondere Polyisocyanate mit mindestens zwei Isocyanatgruppen, und Säurechloride bzw. die jeweiligen Umsetzungsprodukte mit Lactamen. Besonders bevorzugt sind solche Katalysator/Aktivator-Systeme, welche vernetzte (bei Raumtemperatur in m-Kresol nicht mehr vollständig lösliche) Polyamidformkörper ergeben.

Zur Herstellung der erfindungsgemäßen Lactammischungen können beispielsweise die ω-Lactame mit den statistischen Copolymeren gemischt und aufgeschmolzen oder auch die reinen, statistischen Copolymeren (bzw. ihre Lösungen in flüchtigen Lösungsmitteln) mit geschmolzenen Lactamen gemischt werden (unter gegebenenfalls anschließendem Abziehen des Lösungsmittels). Im allgemeinen werden die Füll-/Verstärkungsstoffe erst nach Lösen des Verdickercopolymeren zugegeben, jedoch können auch alle Komponenten (Lactame, Verdicker, Füll-/Verstärkungsstoffe etc.) zusammen homogenisiert werden.

In einer bevorzugten Ausführungform der Erfindung werden die zu lösenden statistischen Copolymeren ("Kautschuke vom Dien-/Nitrilmonomer-Copolymerisat-Typ") als Krümelware (z.B. 0,5 bis 2 mm Korngröße), als Pulver bzw. Mahlgut bzw. als Pulver- bzw. Mahlgut-Gemisch, mit dem zu polymerisierenden Lactam zusammen oder auch als Pulvergemisch bzw. Mahlgut mit den Füll-/Verstärkungsstoffen zusammen eingesetzt. Üblicherweise kann durch diese Vorgehensweise die Lösezeit deutlich reduziert werden.

Es können neben den erfindungsgemäß einzusetzenden Verdicker-Copolymerisaten und den anwesenden Füll- bzw. Verstärkungsstoffen auch (gegebenenfalls funktionalisierte) weitere Kautschuke bzw. Weichsegmente in einer Menge von bis zu 40 Gew.-% (bezogen auf die resultierende Schmelze) in der Schmelze enthalten sein, z.B. funktionalisierte (endgruppenhaltige, einbaufähige) Polyether, Polydiene u.a., wie sie im Stand der Technik für Polyamide beschrieben sind. Dabei sind als funktionalisierte Weichsegmente z.B. telechele, vorzugsweise hydrierte Polydiensegmente mit OH-, NH₂-, COOH- oder Ester-Endgruppen, bevorzugt NH₂-Gruppen, die chemisch, z.B. als Blöcke, in das Polyamid mit eingebaut werden können, zu nennen.

Entsprechende Weichsegmente sowie Verfahren, sie in das Polyamid einzubauen, z.B. über Kopplung an den Aktivator, sind in großer Zahl bekannt.

Beispielsweise können aminierte Weichsegmente, z.B. Polyether, mit Polyisocyanaten zu Isocyanat-terminierten Weichsegmenten umgesetzt werden, welche dann einen polymeren Aktivator darstellen, oder es können OH-terminierte Polyether mit Dicarbonsäuredichloriden, z.B. Terephthalsäuredichlorid, zu Säurechlorid-terminierten Polyethern und anschließend mit einem Lactam zu einem polymeren Aktivator umgesetzt werden.

Je nach Art des Elastomersegments bzw. der Endgruppen bzw. der Art der Verknüpfung mit dem Aktivator kann die Wahl des Katalysators eingeschränkt sein, z.B. dann, wenn der Katalysator das Elastomersegment abbaut. Entsprechende optimale Kombinationen sind bevorzugt erfindungsgemäß einzusetzen.

Prinzipiell sind als Verdicker für Lactamschmelzen alle in dem jeweiligen Lactam bei ca. 140°C gut löslichen Polymeren geeignet; die Wahl wird jedoch drastisch eingeschränkt, da die aktivierte anionische Polymerisation von Lactamen ein chemisch sehr empfindliches System darstellt, welches mit einer Vielzahl von Strukturen, insbesondere H-aciden Verbindungen, reagieren kann, was sich dann durch Polymerisationsstörungen bemerkbar macht. Die überraschende Erkenntnis war, daß die erfindungsgemäß einzusetzenden Verdickerpolymeren im allgemeinen, wenn überhaupt, nur relativ geringe Polymerisationsstörungen bewirken (das Ausmaß von Polymerisationsstörungen kann von dem jeweils verwendeten Katalysator/Aktivatorsystem abhängen), eine gute Viskositätsergiebigkeit und eine sehr gute Löslichkeit zeigen. Die erfindungsgemäß einzusetzenden Polymeren stellen also ein besonders geeignetes Verdickersystem dar.

Eine weitere bevorzugte Ausführungsform der Erfindung ist dadurch gekennzeichnet, daß die als Verdicker einzusetzenden statistischen Copolymerisate mit Thermostabilisatoren (Antioxidantien) ausgerüstet sind, beispielsweise mit sterisch gehinderten Phenolen, aromatischen Aminen u.a.m., wie sie im Stand der Technik beschrieben sind. Bei Verwendung unstabilisierter Kautschuke kann bei der Herstellung größerer Formkörper durch anionische Polymerisation Rißbildung eintreten. Die Lactamschmelze kann aber auch gezielt zugesetzte Stabilisatoren enthalten.

Die erfindungsgemäßen Mischungen können auch weitere übliche Zusatzstoffe, z.B. Entformungsmittel, Antistatika, Farbstoffe bzw. Pigmente, Öle, UV-Stabilisatoren u.a.m., enthalten.

Die nachfolgenden Beispiele mit typischen Einsatzstoffen in typischen Mengen dienen zur Erläuterung der Erfindung, ohne sie darauf einzuschränken. Insbesondere können die Einzelbeispiele auch zu einer Bereichsbildung zwischen den beispielhaften Einzelwerten dienen.

Die Messung der Viskositäten erfolgte mit einem Haake-Viskotester (Rotationsviskosimeter) bei Verwendung der schnellenUmdrehungsstufe (ca. 20-50 s⁻¹ Schergefälle).

Prozentangaben beziehen sich auf das Gewicht.

### Beispiele

**Tabelle 1**

| statistisches Copolymerisat (NBR-Kautschuk) | Acrylnitril (Gew.-%) | Butadien (Gew.-%) | Mooney-Viskosität ML 4 (100°C) |
|---|---|---|---|
| 1 | 28 | 72 | 45 ± 5 |
| 2 | 28 | 72 | 65 ± 7 |
| 3 ¹⁾ | 28 | 72 | 95 ± 7 |
| 4 | 34 | 66 | 65 ± 7 |
| 5 ¹⁾ | 34 | 66 | 80 ± 5 |
| 6 ¹⁾ | 39 | 61 | 45 ± 5 |

| | | | |
|---|---|---|---|
| ¹⁾ Mit einem sterisch gehinderten Phenol stabilisiert | | | |

### Beispiele 1 bis 10

Aus NBR-Kautschukfellen (Kautschuke s. Tabelle 1) wurden kleine Stücke von einigen Millimetern Kantenlänge geschnitten (weniger bevorzugte Ausführungsform) und unter N₂ und Rühren in ε-Caprolactam bei 150°C gelöst. Die Lösezeit lag üblicherweise zwischen 1 und 4 Stunden.

Die erhaltenen Viskositätswerte bei verschiedenen Temperaturen (110, 120 bzw. 135°C) sind in der Tabelle 2 zusammengestellt.

**Tabelle 2**

| Beispiel | NBR-Typ (Tabelle 1) | Menge ¹⁾ (Gew.-%) | η(mPas) ²⁾, 110°C | bei 120°C | 135°C |
|---|---|---|---|---|---|
| 1 | 1 | 5 | 300 | 240 | 210 |
| 2 | 1 | 4 | 180 | 150 | 120 |
| 3 | 2 | 5 | 300 | 240 | 180 |
| 4 | 2 | 4 | 60- 90 | 30- 60 | 30 |
| 5 | 3 | 5 | 420 | 310 | 240 |
| 6 | 3 | 4 | 210 | 180 | 120 |
| 7 | 4 | 5 | 150-180 | 150 | 120 |
| 8 | 5 | 5 | 300 | 240 | 180 |
| 9 | 5 | 4 | 120 | 90 | 60 |
| 10 | 6 | 5 | 180 | 150-180 | 120-150 |

| | | | | | |
|---|---|---|---|---|---|
| ¹⁾bezogen auf Mischung | | | | | |
| ²⁾ε-Caprolactam: η(120°C) ≦ 5 mPas | | | | | |

### Beispiel 11

Es wurde eine Lösung von 5,5 Gew.-% NBR-(3) (siehe Tabelle 1) (Krümelware; Korngröße ca. 1,5 bis 2 mm) in Caprolactam hergestellt, prinzipiell wie in den Beispielen 1 bis 10 beschrieben. Durch Verwendung der Krümelware war die Lösezeit um ca. 75 % reduziert Dann wurden 15 Gew.-% (bezogen auf die Gesamtmischung) Kurzglasfasern zugegeben und durch Rühren dispergiert. Die Glasfasern begannen sich erst nach einigen Minuten abzusetzen.

### Vergleichsbeispiel 1

In derselben Weise wurden Glasfasern in reinem Caprolactam durch Rühren dispergiert.

Nach Abstellen des Rührers beginnen die Glasfasern praktisch momentan zu sedimentieren; nach ca. 10 bis 20 Sekunden haben sie sich fast vollständig abgesetzt (250 ml Becherglas, 140°C).

### Beispiele 12 und 13

In der für Beispiel 11 beschriebenen Weise wurden Caprolactamschmelzen enthaltend 6 bzw. 6,5 Gew.-% desselben NBR-Typs sowie jeweils 30 Gew.-% Kurzglasfasern hergestellt. Die Glasfasern zeigten auch nach 1 h keine signifikante Tendenz zur Sedimentation.

## Patentansprüche

1. Flüssige bzw. schmelzbare Lactammischungen mit verbesserter Dispergierbarkeit von Füll-/Verstärkungsstoffen, bestehend aus
A) 85-99 Gew.-% (in der Mischung A) + B)) ω̅-Lactamen mit mindestens 4 C-Atomen im Ring, insbesondere ε-Caprolactam und ω-Laurinlactam, bevorzugt ε-Caprolactam,
B) 1-15 Gew.-% (in der Mischung A) +B)) statistischer Dien-/Nitrilmonomer-Copolymerisate ("Kautschuke vom Dien-/Nitrilmonomer-Copolymerisat-Typ"), insbesondere Acrylnitril-Butadien-Kautschuke, die in der flüssigen bzw. geschmolzenen Mischung gelöst enthalten sind, zusätzlich
C) 0,5-60 Gew.-%, bezogen auf (A) + B)), üblicher Füll-/Verstärkungsstoffe, sowie gegebenenfalls
D) Verarbeitungshilfen, Schlagzähmodifikatoren, Schmiermitteln, Aktivatoren, Katalysatoren, Stabilisatoren und anderen üblichen Additiven in üblichen Mengen,
wobei die Viskosität der Schmelze ohne Füll-/Verstärkungsstoffe C) mindestens 10 und höchstens 5.000 mPas bei 135°C (gemessen mit einem Rotations-Viskosimeter bei ca. 20-50 s⁻¹) betragen soll und die Zeit, bis dispergierte Glasfasern als Verstärkungsstoffe merklich zu sedimentieren beginnen, gegenüber Schmelzen ohne B) mindestens verdoppelt ist.

2. Lactammischungen nach Anspruch 1, dadurch gekennzeichnet, daß sie statistische Butadien/Acrylnitril-Copolymerisate B) aus 90-45 Gew.-% Butadien und 10-55 Gew.-% Acrylnitril und gegebenenfalls zusätzlich 0-10 Gew.-% weiterer Vinylmonomerer beispielsweise Vinylaromaten und ungesättigte Carbonsäuren bzw. ihre Derivaten wie Ester, Anhydride oder Amide) gelöst enthalten, wobei die Mooney-Viskosität ML (1-4(100°C) der statistischen Dien-/Nitril-Copolymerisate mindestens 30 betragen soll.

3. Lactammischungen nach Ansprüchen 1 und 2, dadurch gekennzeichnet, daß die Copolymerisate B) als Krümelware oder als Pulver bzw. Mahlgut, allein oder im Gemisch mit üblichen anorganischen oder organischen Puderungsmitteln und/oder Lactamen A) und/oder Füll-/Verstärkungsstoffen C), eingesetzt werden.

4. Lactammischungen nach Ansprüchen 1 bis 3, dadurch gekennzeichnet, daß die Copolymerisate B) zu 1-15 Gew.-% eingesetzt werden, wobei die Viskositätswerte bei 135°C und einem Schergefälle von 20-50 s⁻¹ mindestens 50 mPas betragen sollen und wobei die Zeit, bis Glasfasern merklich zu sedimentieren beginnen, mindestens verfünffacht ist.

5. Lactammischungen nach Ansprüchen 1 bis 4, dadurch gekennzeichnet, daß Weichsegmente, gelöst oder dispergiert, in einer Menge von bis zu 40 Gew.-% (bezogen auf A)-D)) anwesend sind.

6. Lactammischungen nach Ansprüchen 1 bis 5, dadurch gekennzeichnet, daß sie Füll- und/oder Verstärkungsstoffe in einer Menge von 5-40 Gew.-% enthalten und daß als Füll- bzw. Verstärkungsstoffe die bekannten Füllstoffe/Verstärkungsstoffe aus der Reihe mineralischer Füllstoffe, Glaskugeln, Glasfasern, Kohlenstoffasern und Aramidfasern eingesetzt werden.

7. Lactammischungen nach Ansprüchen 1 bis 6, dadurch gekennzeichnet, daß die statistischen Copolymerisate B) aus 82-52 Gew.-% Butadien und 18-48 Gew.-% Acrylnitril und gegebenenfalls zusätzlich 0-8 Gew.-% (bezogen auf die Summe von A) + B)) an Styrol, ungesättigten Carbonsäuren oder ihren Estern, aufgebaut sind, wobei die statistischen Copolymerisate B) Mooney-Viskosität ML 1-4(100°C) von mindestens 60 und die flüssigen bzw. geschmolzenen Lactammischungen Viskositätswerte von mindestens 100 mPas bei 135°C (gemessen mit einem Rotationsviskosimeter bei ca. 20-50 s⁻¹) aufweisen.

8. Verwendung der Lactammischungen nach Ansprüchen 1 bis 7 zur Herstellung von Gußpolyamiden durch hydrolytische Polymerisation oder durch aktivierte anionische Polymerisation, unter Verwendung üblicher Katalysatoren und Aktivatoren der aktivierten anionischen Polymerisation, sowie gegebenenfalls unter Zusatz üblicher Zusatzstoffe, bevorzugt unterhalb des Schmelzpunktes des jeweils entstehenden Polyamids.

9. Kautschukhaltige Gußpolyamid-Artikel, hergestellt aus Lactammischungen nach Ansprüchen 1 bis 7, unter Verwendung üblicher Katalysatoren und Aktivatoren sowie gegebenenfalls weiterer üblicher Zusatzstoffe.

10. Verfahren zur Herstellung von Gußpolyamid-Artikeln unter Verwendung der Lactammischungen nach Ansprüchen 1 bis 7, dadurch gekennzeichnet, daß die Lactammischungen bei Anwesenheit üblicher Katalysatoren und Aktivatoren der aktivierten anionischen Polymerisation unterhalb des Schmelzpunktes des jeweils entstehenden Polyamids, polymerisiert werden.

## Claims

1. Liquid or fusible lactam mixtures with improved dispersibility of fillers/reinforcing materials, consisting of
A) 85 - 99% by weight (in the mixture of A) + B)) of ω-lactams containing at least 4 carbon atoms in the ring, more particularly ε-caprolactam and ω-lauric lactam, preferably ε-caprolactam,
B) 1 - 15% by weight (in the mixture of A) + B)) of statistical diene/nitrile monomer copolymers ("rubbers of the diene/nitrile monomer copolymer type"), more particularly acrylonitrile/butadiene rubbers, dissolved in the liquid or molten mixture,
C) 0.5 - 60% by weight, based on A) + B), of typical fillers/reinforcing materials and optionally
D) processing aids, impact modifiers, lubricants, activators, catalysts, stabilizers and other typical additives in typical quantities,
the viscosity of the melt without the fillers/reinforcing materials C) having to be at least 10 and at most 5,000 mPas at 135°C (as measured with a rotational viscosimeter at around 20 - 50 s⁻¹) and the time elapsing before dispersed glass fibres as reinforcing materials begin significantly to sediment being at least doubled in relation to melts without B).

2. Lactam mixtures as claimed in claim 1, characterized in that they contain statistical butadiene/acrylonitrile copolymers B) of 90 - 45% by weight of butadiene and 10 - 55% by weight of acrylonitrile and, optionally, 0 - 10% by weight of other vinyl monomers, for example aromatic vinyl compounds, and unsaturated carboxylic acids or derivatives thereof, such as esters, anhydrides or amides in dissolved form, the Mooney viscosity ML 1-4(100°C) of the statistical diene/nitrile copolymers having to be at least 30.

3. Lactam mixtures as claimed in claims 1 and 2, characterized in that the copolymers B) are used in crumb form or in the form of a powder or ground material either as such or in admixture with typical inorganic or organic powdering agents and/or lactams A) and/or fillers/reinforcing materials C).

4. Lactam mixtures as claimed in claims 1 to 3, characterized in that the copolymers B) are used in a quantity of 1 - 15% by weight, the viscosity values at 135°C and at a shear rate of 20 - 50 s⁻¹ having to be at least 50 mPas and the time elapsing before glass fibres begin significantly to sediment being increased by a factor of at least 5.

5. Lactam mixtures as claimed in claims 1 to 4, characterized in that soft segments are present in dissolved or dispersed form in a quantity of up to 40% by weight, based on A) - D).

6. Lactam mixtures as claimed in claims 1 to 5, characterized in that they contain fillers and/or reinforcing materials in a quantity of 5 to 40% by weight and in that the fillers and/or reinforcing materials used are the known fillers/reinforcing materials from the group of mineral fillers, glass beads, glass fibres, carbon fibres and aramide fibres.

7. Lactam mixtures as claimed in claims 1 to 6, characterized in that the statistical copolymers B) are produced from 82 - 52% by weight of butadiene and 18 - 48% by weight of acrylonitrile and, optionally, 0 - 8% by weight, based on the sum of A) + B), of styrene, unsaturated carboxylic acids or eaters thereof, the statistical copolymers B) having a Mooney viscosity ML 1-4(100°C) of at least 60 and the liquid or molten lactam mixtures having viscosity values of at least 100 mPas at 135°C (as measured with a rotational viscosimeter at around 20 - 50 s⁻¹).

8. The use of the lactam mixtures claimed in claims 1 to 7 for the production of cast polyamides by hydrolytic polymerization or by activated anionic polymerization using typical catalysts and activators for activated anionic polymerization and optionally typical additives, preferably below the melting point of the polyamide formed.

9. Rubber-containing cast polyamide articles produced from the lactam mixtures claimed in claims 1 to 7 using typical catalysts and activators and optionally other typical additives.

10. A process for the production of cast polyamide articles using the lactam mixtures claimed in claims 1 to 7, characterized in that the lactam mixtures are polymerized in the presence of typical catalysts and activators for activated anionic polymerization below the melting point of the polyamide formed.

## Revendications

1. Mélanges liquides ou fusibles à base de lactames, présentant une dispersabilité améliorée des matières de charge/matières renforçantes, et consistant en :
A) 85 à 99 % en poids (du mélange A + B) d'ω-lactames à au moins 4 atomes de carbone dans le cycle, plus spécialement l'ε-caprolactame ou l'ω-laurolactame, de préférence l'ε-caprolactame,
B) 1 à 15 % en poids (du mélange A + B) de copolymères statistiques de diènes/nitriles monomères ("caoutchoucs du type copolymère de diène/nitrile monomère"), plus spécialement de caoutchoucs acrylonitrile-butadiène, contenus en solution dans le mélange liquide ou fondu, et en outre,
C) 0,5 à 60 % en poids, par rapport à A + B, de matières de charge/matières renforçantes usuelles, et le cas échéant,
D) des produits auxiliaires de façonnage, des agents modifiants apportant la résistance au choc, des agents lubrifiants, des activateurs, des catalyseurs, des stabilisants et d'autres additifs usuels aux proportions usuelles,
la viscosité de la masse fondue, en l'absence des matières de charge/matières renforçantes C) étant d'au moins 10 au maximum de 5 000 mPas à 135°C (mesure au viscosimètre rotatif à environ 20 à 50 s⁻¹) et la durée au bout de laquelle les fibres de verte dispersées en tant que matières renforçantes commencent à sédimenter dans une mesure notable étant au moins doublée par rapport aux masses fondues ne contenant pas B).

2. Mélanges à base de lactames selon la revendication 1, caractérisés en ce qu'elles contiennent en solution des copolymères statistiques butadiène/acrylonitrile B) de 90 à 45 % en poids de butadiène et 10 à 55 % en poids d'acrylonitrile avec en outre le cas échéant 0 à 10 % en poids d'autres monomères vinyliques, par exemple des monomères vinylaromatiques, et des acides carboxyliques insaturés ou leurs dérivés tels que des esters, des anhydrides ou des amides, la viscosité Mooney ML 1-4 (100°C) des copolymères statistiques diène nitrile étant d'au moins 30.

3. Mélanges à base de lactames selon les revendications 1 et 2, caractérisés en ce que les copolymères B) sont mis en oeuvre à l'état de grumeaux ou à l'état de poudre ou à l'état de produit broyé, seuls ou en mélange avec des agents de poudrage minéraux ou organiques usuels et /ou des lactames A) et/ou des matières de charge/matières renforçantes C).

4. Mélanges à base de lactames selon les revendications 1 à 3, caractérisés en ce que les copolymères B sont mis en oeuvre en proportion de 1 à 15 % en poids, la valeur de viscosité à 130°C et sous cisaillement de 20 à 50 s⁻¹ étant d'au moins 50 mPas et la durée au bout de laquelle les fibres de verre commencent à sédimenter dans une mesure notable étant au moins quintuplée.

5. Mélanges à base de lactames selon les revendications 1 à 4, caractérisés en ce que des segments mous, à l'état dissous ou dispersé, sont présents en proportion allant jusqu'à 40 % du poids de A) à D).

6. Mélanges à base de lactames selon les revendications 1 à 5, caractérisés en ce qu'elles contiennent des matières de charge et/ou des matières renforçantes en quantité de 5 à 40 % en poids et en ce que ces matières de charge ou matières renforçantes sont des matières de charge et/ou matières renforçantes connues choisies parmi les matières de charge minérales, les billes de verte, les fibres de verte, les fibres de carbone et les fibres d'Aramid.

7. Mélanges à base de lactames selon les revendications 1 à 6, caractérisés en ce que les copolymères statistiques B) sont constitués de 82 à 52 % en poids de butadiène et 18 à 48 % en poids d'acrylonitrile avec le cas échéant en outre 0 à 8 % en poids (par rapport à la somme A + B) de styrène, d'acides carboxyliques insaturés ou leurs esters, les copolymères statistiques B) ayant une viscosité Mooney ML-4 (100°C) d'au moins 60 et les mélanges à base de lactames liquides ou fondus ayant des valeurs de viscosité d'au moins 100 mPas à 135°C (mesure au viscosimètre rotatif sous un cisaillement d'environ 20 à 50 s⁻¹).

8. Utilisation des mélanges à base de lactames selon les revendications 1 à 7 pour la fabrication de polyamides coulés par polymérisation hydrolytique ou par polymérisation anionique activée avec utilisation de catalyseurs usuels et d'activateurs de la polymérisation anionique activée et le cas échéant d'additifs usuels, de préférence au-dessous du point de fusion du polyamide formé.

9. Polyamide coulé, contenant un caoutchouc, préparé à partir de mélanges à base de lactames selon les revendications 1 à 7, avec utilisation de catalyseurs usuels, d'activateurs et le cas échéant d'autres additifs usuels.

10. Procédé pour la fabrication d'articles en polyamides coulés par utilisation des mélanges à base de lactames selon les revendications 1 à 7, caractérisé en ce que l'on polymérise les mélanges à base de lactames en présence de catalyseurs usuels et d'activateurs de la polymérisation anionique activée au-dessous du point de fusion du polyamide formé.
